# EUROPÄISCHE PATENTSCHRIFT

(11) **EP 2 739 425 B1**
(45) Veröffentlichungstag und Bekanntmachung des Hinweises auf die Patenterteilung: **29.03.2017**
(21) Anmeldenummer: 12727650.9
(22) Anmeldetag: 13.06.2012
(51) Int. Cl.: B23K 9/20, B23K 11/00, B23K 31/02, B21D 22/20, B21D 53/88, B62D 27/02

(54) **VERFAHREN ZUR HERSTELLUNG EINES BAUTEILS ODER EINES AUS MEHREREN BAUTEILEN BESTEHENDEN BAUTEILVERBUNDS UNTER VERWENDUNG EINER KAMERA ZUR ERKENNUNG DER POSITION EINES BAUTEILS**
METHOD FOR PRODUCING A COMPONENT OR A COMPONENT COMPOSITE CONSISTING OF A PLURALITY OF COMPONENTS, USING A CAMERA FOR DETECTING THE POSITION OF A COMPONENT
PROCÉDÉ POUR FABRIQUER UNE PIÈCE OU UN ENSEMBLE DE PIÈCES COMPOSÉ DE PLUSIEURS PIÈCES, AVEC L'AIDE D'UNE CAMÉRA POUR LA RECONNAISSANCE DE LA POSITION D'UNE PIÈCE

(30) Priorität: 05.08.2011 DE 102011080483
(43) Veröffentlichungstag der Anmeldung: 11.06.2014
(73) Patentinhaber: Bayerische Motoren Werke Aktiengesellschaft, 80809 München (DE)
(72) Erfinder: HERZINGER, Thomas, 80639 München (DE); VAN NIEKERK, Johann, 80993 München (DE)
(86) Internationale Anmeldenummer: PCT/EP2012/061174
(87) Internationale Veröffentlichungsnummer: WO 2013/020741

(56) Entgegenhaltungen:
- DE-A1- 10 346 264
- DE-B3-102008 056 971
- DE-B3-102009 049 602
- GB-A- 2 034 173
- US-A- 5 696 688
- US-A1- 2005 139 411

## Beschreibung

Die vorliegende Erfindung betrifft ein Verfahren gemäß den Merkmalen des Patentanspruches 1.

Aus der US 2005 013 9411 A1 ist ein Blechbauteil bekannt, welches ein Durchgangsloch aufweist. Im Bereich des Durchgangslochs ist eine Mutter an das Blechbauteil angeschweißt.

Aus der DE 103 46 264 A1 ist ein Verfahren zum Verbinden zweiter Werkstücke durch Schmelzschweißen bekannt, wobei ein in einem der Werkstücke vorgesehene Sicke mittels eines Lasers ausgeleuchtet wird. Kanten der Sicke ergeben ein definiertes Kontrastprofil, welches von einer Kamera erfasst wird.

Aus der US 5 696 688 ist ein Verfahren zum Aufschweißen eines Bolzens auf eine "Schale eines Kochgeschirrs" bekannt, wobei an der Schale eine Markierung vorgesehen wird, welch von einem Sensor detektiert wird. Der Bolzen wird an der von dem Sensor detektierten Position der Markierung aufgeschweißt.
Zum technischen Hintergrund der vorliegenden Erfindung zählen ferner die GB 2 034 173 A, sowie die DE 10 2008 056 971 B3.

In thematischerer Verbindung mit dem Gegenstand der vorliegenden Patentanmeldung stehen Bauteilverbindungen, die aus den beiden nicht vorveröffentlichten deutschen Patentananmeldungen DE 10 2010 028 323.1 sowie aus der DE 10 2010 040 547.7 bekannt sind.

Zum relevanten Stand der Technik zählen ferner die DE 10 2009 049 602 B3, DE 10 2008 038 747 A1, DE 10 2009 041 161 A1, DE 10 2010 028 322 A1, DE 10 2007 044 635 A1, DE 10 2004 046 584 A1, DE 33 02 177 A1, US 4,942,539, US 2003/0090682 A1, EP 1772199 A1, US 5,150,623, DE 197 45 728 A1, DE 696 32 309 T2 sowie die DE 10 2007 061 803 B3.

Die oben bereits erwähnte DE 10 2009 049 602 B3 beschreibt ein Karosseriebauverfahren zum lösbaren Vorfixieren zweier fest miteinander zu verbindender Bauteile, von denen mindestens eines der beiden Bauteile ein Karosserieteil einer herzustellenden Fahrzeugkarosserie ist. Auf das erste der beiden Bauteile wird eine als "Formschlusselement" fungierende Kugel aufgeschweißt. Über ein in dem zweiten Bauteil vorgesehenes "Formschlusselement", das als Loch ausgebildet sein kann und das mit der Kugel zusammenwirkt, werden die beiden Bauteile zusammengesteckt bzw. zusammengeklemmt, wobei die Kugel in das Loch eingeführt wird und dort einrastet. Anschließend können die beiden derart "vorfixierten" Bauteile dauerhaft fest miteinander verbunden werden, z. B. durch Verschweißen. Die "erreichbare Fügegenauigkeit" hängt ganz entscheidend von der Genauigkeit ab, mit der die beiden zusammenwirkenden "Formschlusselemente" hergestellt bzw. platziert werden.

Aufgabe der Erfindung ist es, ein Verfahren zur Herstellung eines Bauteils anzugeben, das für eine hochpräzise und einfache Verbindung mit mindestens einem weiteren Bauteil bzw. für eine hochpräzise und einfache Vorfixierung an einem weiteren Bauteil geeignet ist, wobei das Verfahren insbesondere auch in der Großserienfertigung von Fahrzeugkarosserien einsetzbar sein soll.

Diese Aufgabe wird durch die Merkmale des Patentanspruchs 1 gelöst. Vorteilhafte Ausgestaltungen und Weiterbildungen der Erfindung sind den Unteransprüchen zu entnehmen.

Ausgangspunkt der Erfindung ist ein Verfahren zur Herstellung eines Bauteils, insbesondere eines Karosseriebauteils für ein Fahrzeug, oder eines aus mehreren Bauteilen bestehenden Baueilverbunds. Gemäß der Erfindung wird zunächst ein Blech mittels eines Umformwerkzeugs umgeformt. Bei dem Umformwerkzeug kann es sich insbesondere um Press- oder Tiefziehwerkzeug handeln. Dementsprechend kann es sich bei dem umformten Blech um ein Pressbauteil bzw. um ein tiefgezogenes Bauteil (Tiefziehteil) handeln.

An mindestens einer Stelle des umgeformten Blechs wird eine "Referenzmarkierung" hergestellt. Der Begriff "Referenzmarkierung" ist äußerst breit auszulegen. Bei der Referenzmarkierung kann es sich beispielsweise um eine punktartige Vertiefung bzw. um eine Mulde o. ä. handeln. Wichtig ist, dass die Referenzmarkierung so beschaffen ist, dass sie zur möglichst eindeutigen und möglichst präzisen Identifizierung eines Referenzpunkts auf einer Oberfläche des umformten Blechs geeignet ist.

Der Kern der Erfindung besteht in der Vorgehensweise der Fixierung eines ersten Fixierelements an bzw. auf dem umgeformten Blech.

Zunächst wird das umgeformte Blech mittels einer Positionierungsvorrichtung "grob positioniert". "Grob Positionieren" bedeutet in diesem Zusammenhang, dass das umgeformte Blech so positioniert wird, dass sich die Referenzmarkierung in einem vorgegebenen Raumbereich befindet. Beispielsweise ist denkbar, dass das umgeformte Blech auf einen Bearbeitungstisch oder eine Haltevorrichtung aufgelegt wird und so ausgerichtet wird, dass die Referenzmarkierung in einem vorgegebenen "Grobpositionierungsbereich" zu liegen kommt. Der Grobpositionierungsbereich kann z. B. ein quadratischer Bereich von 5 cm x 5 cm sein. Alternativ dazu könnte der Grobpositionierungsbereich auch durch einen Kreisbereich gebildet sein, der einen Radius von z. B. 5 cm aufweist.

Zur Grobpositionierung des umgeformten Blechs könnte beispielsweise ein mechanischer Anschlag, z. B. in Form einer oder mehrerer" Anschlagleisten", an die das umgeformte Blech angelegt wird, verwendet werden. Hierfür in Frage kommt z. B. auch ein durch zwei Anschlagschenkel gebildeter winkelförmiger Anschlag, an den ein "Eckbereich" des umgeformten Blechs angelegt werden kann.

In einem weiteren Schritt wird mittels einer "Positionserkennungseinrichtung" die Position der Referenzmarkierung identifiziert. Bei der Positionserkennungseinrichtung kann es sich z. B. um ein Kamerasystem mit einer zugeordneten Auswerteelektronik handeln, welche der Position der Referenzmarkierung entsprechende Positionsdaten erzeugt. Da das umgeformte Blech vorher zumindest grob positioniert wird, wird sichergestellt, dass sich die Referenzmarkierung in einem Raumbereich befindet, indem sie von der Positionserkennungseinrichtung erkannt werden kann.

In einem weiteren Schritt wird ein erstes "Fixierelement" auf Basis der von der Positionserkennungseinrichtung generierten Positionsdaten platziert. Das Platzieren bzw. Positionieren des ersten Fixierelements erfolgt mit einer elektronisch gesteuerten Einrichtung, z. B. mittels eines Roboters.

Nach dem Platzieren bzw. Positionieren des ersten Fixierelements wird dieses mit dem umgeformten Blech verbunden. Das erste Fixierelement kann z. B. an das umgeformte Blech angeschweißt werden. Auch das Verbinden bzw. Anschweißen kann automatisch, z. B. mittels eines Schweißroboters durchgeführt werden.

Mittels des oben beschriebenen, erfindungsgemäßen Verfahrens kann das in der eingangs erwähnten DE 10 2009 049 602 B3 patentierte Verfahren automatisiert werden. Ein wesentlicher Vorteil der Erfindung ist darin zu sehen, dass das zum losen Fixieren zweier Bauteile verwendete erste Fixierelement mit dem erfindungsgemäßen Verfahren sehr präzise an dem umgeformten Blechbauteil appliziert werden kann.

Nach einer Weiterbildung der Erfindung wird die Referenzmarkierung während des Umformens des Blechs in dem Umformwerkzeug hergestellt. Das Herstellen der Referenzmarkierung kann z.B. mittels eines Prägeelements erfolgen, das in dem Umformwerkzeug vorgesehen ist oder integraler Bestandteil des Umformwerkzeugs ist. Hierzu geeignet ist z. B. ein Prägeelement, das fest mit einem Formteil des Umformwerkzeug verbunden ist. Im Falle eines zweiteiligen Umformwerkzeugs kann das Prägeelement z. B. am Oberwerkzeug oder am Unterwerkzeug angeordnet oder das "integraler Bestandteil" des Oberwerkzeugs oder des Unterwerkzeugs sein. Alternativ dazu kann das Prägeelement auch als Prägestempel ausgebildet sein, der relative zu dem Umformwerkzeug, d. h. relativ zu einem Oberwerkzeug oder einem Unterwerkzeug des Umformwerkzeugs verfahrbar ist.

Alternativ dazu könnte die Referenzmarkierung auch in anderer Weise erzeugt werden, z. B. mittels einer Lasereinrichtung.

Wird mit einem Prägeelement gearbeitet, so kann dieses so ausgebildet sein, dass sich eine rotationssymmetrische, insbesondere eine kalottenförmige Referenzmarkierung, z. B. in der Form einer kalottenförmigen Mulde, einer kegeligen Vertiefung o. ä. ergibt. Das Prägeelement kann auch so ausgebildet sein, dass sich eine fadenkreuzartige Referenzmarierkung mit zwei sich schneidenden Linien ergibt.

Um sicherzustellen, dass sich die Position des umgeformten Blechs beim Anbringen des ersten Fixierelements nicht verändert, kann vorgesehen sein, dass das Blechbauteil nach dem Grobpositionieren und während des Anbringens des ersten Fixierelements mittels einer Haltevorrichtung in seiner mo mentanen Position gehalten wird. Bei der Haltevorrichtung kann es sich z. B. um eine Klemmvorrichtung, insbesondere um einen "Halteroboter" handeln.

Nach einer Weiterbildung der Erfindung wird nach dem "Setzen" des ersten Fixierelements -an der Stelle der Referenzmarkierung die tatsächliche Position des ersten Fixierelelements überprüft. Hierzu wird mittels einer Meßeinrichtung die Position des ersten Fixierelements relativ zu mindestens einem "Orientierungspunkt" des umgeformten Blechs ermittelt. Der Begriff "Orientierungspunkt" ist äußerst breit auszulegen. Ein Orientierungspunkt kann z. B. durch ein "natürliches Geometriemerkmal" des umgeformten Blechs, wie z. B. durch einen Eckpunkt, eine Lochmitte, eine Kante o. ä. gebildet sein.

Als Orientierungsmerkmal kann insbesondere ein eigens zu diesem Zweck hergestelltes bzw. erzeugtes Merkmal, wie z. b. eine weitere Referenzmarkierung verwendet werden. Vorzugsweise sind an dem umgeformten Blech mehrere derartige Orientierungsmerkmale bzw. Referenzmarkierungen vorgesehen. Das bzw. die Orientierungsmerkmale bzw. Referenzmarkierungen können ebenfalls beim Umformen des Blechs im Umformwerkzeug hergestellt werden, insbesondere in gleicher bzw. analoger Weise wie die Herstellung der zur Positionierung des ersten Fixierelements dienenden Referenzmarkierung.

Wie bereits erwähnt, kann mittels des erfindungsgemäßen Verfahrens auch ein aus mehreren Bauteilen bestehender Bauteilverbund hergestellt werden. Ein Bauteilverbund besteht aus mindestens zwei miteinander verbundenen Bauteilen. Hierzu kann ein zweites Bauteil, welches ein mit dem ersten Fixierelement zusammenwirkendes zweites Fixierelement aufweist, mit dem umgeformten Blechteil verbunden werden. Die beiden Fixierelemente sind so konzipiert, dass sie eine lösbare Verbindung bilden. Das zweite Bauteil kann mittels einer elektronisch gesteuerten Einrichtung, insbesondere mittels eines Montageroboters an das erste Bauteil abgesetzt und daran fixiert werden. Der elektronisch gesteuerten Einrichtung bzw. dem Roboter werden Positionsdaten des umgeformten Blechbauteils zugeführt, insbesondere Positionsdaten zur Lage bzw. Position des ersten Fixierelements, welche von der Positionserkennungseinrichtung generiert wurden.

Zum Verbinden der beiden Bauteile werden diese so zueinander bewegt, dass das erste Fixierelement entlang einer Einführrichtung in das an dem zweiten Bauteil vorgesehene zweite Fixierelement eingeführt und daran festgeklemmt wird. Die beiden Fixierelemente können so beschaffen sein, dass die beiden Bauteile nach dem lösbaren Verbinden in Richtungen quer zu der Einführrichtung unverschieblich relativ zueinander fixiert sind. Sie können ferner so konfiguriert sein, dass die beiden zusammenwirkenden Fixierelemente eine Clip- oder Schnappverbindung bilden, wobei das erste Fixierelement an dem zweiten Fixierelement eingerastet wird bzw. in eine das andere Fixierelement hintergreifende (formschlüssige und/oder kraftschlüssige) Position gebracht wird. Die beiden Bauteile können an den Fixierelementen kraftschlüssig und/oder formschlüssig aneinandergeklemmt werden.

Nach dem lösbaren Verbinden der beiden Bauteile über die Fixierelemente können die beiden Bauteile dauerhaft fest oder unlösbar miteinander verbunden werden, z. B. stoffschlüssig, insbesondere durch Verschweißen oder mittels weiteren Verbindungselementen, wie z. B. Nieten, Schrauben o. ä.

Ein wesentlicher Vorteil einer derartigen lösbaren Verbindung der beiden Bauteile besteht darin, dass die lösbare Verbindung die beiden Bauteile fest und präzise genug relativ zueinander positioniert, so das diese ohne weitere Spannvorrichtungen miteinander verschweißt werden können.

Wie bereits angedeutet, kann es sich bei dem ersten Fixierelement um ein "männliches Fixierelement", d. h. um ein Fixierelement handeln, welches von dem umgeformten Blech absteht und bei dem zweiten Fixierelement um ein "weibliches Fixierelement", das zur Aufnahme des männlichen Fixierelements vorgesehen ist.

Vorzugsweise weist das männliche Fixierelement quer zu der Einführrichtung ein Übermaß in Bezug auf das weibliche Fixierelement auf. Dadurch wird erreicht, dass die beiden Bauteile nach dem Zusammenstecken der Fixierelemente aneinandergeklemmt sind.

Gemäß der Erfindung weist das erste Fixierelement teilweise oder ganz die Form einer Kugel oder teilweise oder ganz eine kugelähnliche Form auf. Eine derartige "konvexe Geometrie" hat den Vorteil, dass beim Einführen des männlichen Fixierelements in das weibleiche Fixierelement ein Verhaken bzw. Verkanten nahezu ausgeschlossen ist. Desweiteren sind kugelförmige Fixierelemente sehr kostengünstig erhältlich.

Das erste bzw. männliche Fixierelement kann z. B. aus Metall, insbesondere aus Stahl oder Aluminium bestehen. Wie bereits erwähnt, kann es mit dem umgeformten Blechteil verschweißt werden.

Das in dem zweiten Bauteil vorgesehene weibliche Fixierelement kann insbesondere durch ein Durchgangsloch gebildet sein. Das Durchgangsloch kann kreisförmig gestaltet sein oder eine von einer Kreisform abweichende Form haben. In Betracht kommen z.B. quadratische oder dreieckige Durchgangslöcher. Das als weibliches Fixierelement fungierende Durchgangsloch kann z.B. aus dem zweiten Bauteil ausgestanzt sein.

Wie bereits angedeutet, kann es sich bei dem umgeformten Blechteil um ein Karosseriebauteil einer herzustellenden Fahrzeugkarosserie handeln. Im Fal le eines Bauteilverbundes kann es sich auch bei einzelnen oder allen der weiteren Bauteile um Karosseriebauteile oder um Anbauteile handeln.

## Patentansprüche

1. Verfahren zur Herstellung eines Bauteils, insbesondere eines Karosseriebauteils für ein Fahrzeug, oder eines aus mehreren Bauteilen bestehenden Bauteilverbunds, mit folgenden Schritten:
• Umformen eines Blechs in einem Umformwerkzeug, insbesondere in einem Tiefziehwerkzeug,
• Herstellen einer Referenzmarkierung an einer vorgegebenen Stelle des Blechs,
• die Position der Referenzmarkierung mittels einer Positionserkennungseinrichtung, insbesondere mittels eines Kamerasystems, identifiziert wird, wobei die Positionserkennungseinrichtung der Position der Referenzmarkierung entsprechende Positionsdaten erzeugt, wobei
• das umgeformte Blech mittels einer Positionierungsvorrichtung grob positioniert wird, derart, dass sich die Referenzmarkierung in einem vorgegebenen Raumbereich befindet,
• ein erstes Fixierelement an der Stelle der Referenzmarkierung auf Basis der Positionsdaten mittels einer elektronisch gesteuerten Positionierungseinrichtung positioniert wird, wobei ein erstes Fixierelement verwendet wird, das teilweise oder ganz die Form einer Kugel oder teilweise oder ganz eine kugelähnliche Form aufweist, und
• das erste Fixierelement mit dem umgeformten Blech verbunden wird, insbesondere Anschweißen des ersten Fixierelements an das umgeformte Blech mittels einer Schweißeinrichtung.

2. Verfahren nach Anspruch 1, **dadurch gekennzeichnet,**
**dass** die Referenzmarkierung während des Umformens in dem Umformwerkzeug oder mittels des Umformwerkzeugs erzeugt wird.

3. Verfahren nach Anspruch 1 oder 2, **dadurch gekennzeichnet, dass** das umgeformte Blech nach dem grob Positionieren und während des Verbindens mittels einer Halteeinrichtung in seiner Position gehalten wird.

4. Verfahren nach einem der Ansprüche 1 bis 3, **dadurch gekennzeichnet, dass** die Schweißeinrichtung von der Positionierungseinrichtung gesteuert wird oder Teil der Positionierungseinrichtung ist.

5. Verfahren nach einem der Ansprüche 1 bis 4, **dadurch gekennzeichnet, dass** das Umformwerkzeug ein Prägeelement aufweist, mittels dem die Referenzmarkierung in das Blech eingeprägt wird.

6. Verfahren nach Anspruch 5, **dadurch gekennzeichnet, dass** das Prägeelement fest mit einem Formteil des Umformwerkzeugs verbunden oder integraler Bestandteil des Formteils ist.

7. Verfahren nach Anspruch 5, **dadurch gekennzeichnet, dass** das Prägeelement verfahrbar relativ zu einem Formteil des Umformwerkzeugs angeordnet ist.

8. Verfahren nach einem der Ansprüche 1 bis 7, **dadurch gekennzeichnet, dass** die Referenzmarkierung rotationssymmetrisch ist, insbesondere, dass die Referenzmarkierung die Form einer kalottenförmigen Mulde aufweist.

9. Verfahren nach einem der Ansprüche 1 bis 8, **dadurch gekennzeichnet, dass** mittels einer Messeinrichtung die tatsächliche Position des ersten Fixierelements relativ zu mindestens einem Orientierungsmerkmal des umgeformten Blechs ermittelt wird.

10. Verfahren nach Anspruch 9, **dadurch gekennzeichnet, dass** das mindestens eine Orientierungsmerkmal ebenfalls mittels oder in dem Umformwerkzeug während des Umformens erzeugt wird.

11. Verfahren nach einem der Ansprüche 1 bis 10, **dadurch gekennzeichnet, dass** an dem umgeformten Blechbauteil ein zweites Bauteil fixiert wird, wobei ein an dem zweiten Bauteil vorgesehenes zweites Fixierelement mit dem ersten Fixierelemente eine lösbare Verbindung bildet.

12. Verfahren nach Anspruch 11, **dadurch gekennzeichnet, dass** das zweite Bauteils mittels einer elektronisch gesteuerten Positionierungseinrichtung, insbesondere mittels eines Roboters an dem umgeformten Blechbauteil fixiert wird, wobei der elektronisch gesteuerten Positionierungseinrichtung Positionsdaten zugeführt werden oder wobei der elektronisch gesteuerten Positionierungseinrichtung von einer Positionserkennungseinrichtung generierte Positionsdaten des ersten Fixierelements und/oder des umgeformten Blechbauteils zugeführt werden.

13. Verfahren nach Anspruch 12, **dadurch gekennzeichnet, dass** beim lösbaren Aneinanderfixieren der beiden Bauteile das erste Fixierelement entlang einer Einführrichtung in das an dem zweiten Bauteil vorgesehene zweite Fixierelement eingeführt und daran festgeklemmt wird.

14. Verfahren nach einem der vorangehenden Ansprüche, **dadurch gekennzeichnet, dass** die beiden Bauteile nach dem lösbaren Verbinden in Richtungen quer zur Einführrichtung unverschieblich relativ zueinander fixiert sind.

15. Verfahren nach einem der Ansprüche 11 bis 14, **dadurch gekennzeichnet, dass** die beiden Fixierelemente eine Rast- oder Schnapp-Verbindung bilden, wobei das erste Fixierelemente an dem zweiten Fixierelement eingerastet ist bzw. in eine das zweite Fixierelement hintergreifende Position gebracht wird.

16. Verfahren nach einem der Ansprüche 11 bis 15, **dadurch gekennzeichnet, dass** die beiden Bauteile an den Fixierelementen kraftschlüssig und/oder formschlüssig aneinander geklemmt werden.

17. Verfahren nach einem der Ansprüche 11 bis 16, **dadurch gekennzeichnet, dass** die beiden Bauteile nach dem lösbaren Verbinden dauerhaft fest bzw. unlösbar miteinander verbunden werden.

18. Verfahren nach einem der Ansprüche 11 bis 17, **dadurch gekennzeichnet, dass** die beiden Bauteile nach dem lösbaren Verbinden miteinander verschweißt werden.

19. Verfahren nach Anspruch 18, **dadurch gekennzeichnet, dass** die beiden Bauteile vor bzw. während des Verschweißens ausschließlich durch lösbar miteinander verbundene erste und zweite Fixierelemente relativ zueinander gehalten werden.

20. Verfahren nach einem der Ansprüche 1 bis 19, **dadurch gekennzeichnet, dass** es sich bei dem mindestens einen ersten Fixierelement oder bei dem mindestens einen zweiten Fixierelement um ein männliches und bei dem damit zusammenwirkenden anderen Fixierelement um ein weibliches Element handelt, wobei die beiden Bauteile durch Zusammenstecken der beiden Fixierelemente aneinander geklemmt werden.

21. Verfahren nach Anspruch 20, **dadurch gekennzeichnet, dass** das männliche Fixierelement quer zu einer Einführrichtung, in der es in das weibliche Fixierelement eingeführt wird, ein Übermaß in Bezug auf das weibliche Fixierelement aufweist, wobei die beiden Bauteile an den Fixierelementen aneinander geklemmt werden.

22. Verfahren nach einem der Ansprüche 1 bis 21, **dadurch gekennzeichnet**, das als erstes Fixierelement ein vollständig aus Metall, insbesondere aus Stahl oder Aluminium, bestehendes Element verwendet wird.

23. Verfahren nach einem der Ansprüche 1 bis 22, **dadurch gekennzeichnet, dass** als erstes Fixierelement ein Element verwendet wird, welches
• einen Funktionskopf aufweist, der teilweise oder ganz die Form einer Kugel oder ganz oder teilweise oder ganz eine kugelähnliche Form hat, und
• einen mit dem Funktionskopf verbundenen Fußabschnitt, wobei der Fußabschnitt mit dem umgeformten Blechbauteil verbunden wird.

24. Verfahren nach einem der Ansprüche 20 bis 23, **dadurch gekennzeichnet, dass** das weibliche Fixierelement durch Erzeugen eines Durchgangslochs in dem zweiten Bauteil hergestellt wird.

25. Verfahren nach Anspruch 24, **dadurch gekennzeichnet, dass** ein Durchgangsloch erzeugt wird, das eine von einer Kreisform abweichende Form hat, insbesondere eine Form, die einem Quadrat oder einem Dreieck ähnelt.

## Claims

1. A method for producing a component, especially a bodywork component for a vehicle, or a composite component comprising a plurality of components, the method comprising the following steps:
• forming a metal sheet in a forming die, especially in a deep-drawing die,
• producing a reference marking in a predetermined location on the metal sheet,
• the position of the reference marking is identified by a position recognition device, especially by a camera system, wherein the position recognition device generates positional data which correspond to the position of the reference marking, wherein
• the formed metal sheet is positioned approximately by a positioning device such that the reference marking is located in a predetermined spatial region,
• a first fixing element is positioned by means of an electronically controlled positioning means in the location of the reference marking based on the positional data, wherein a first fixing element is used which partly or completely has the shape of a sphere, or partly or completely has a shape similar to a sphere, and
• the first fixing element is joined to the formed metal sheet, especially by welding the first fixing element on the formed metal sheet by a welding device.

2. A method according to claim 1, **characterised in that**
the reference marking is produced during the forming procedure in the forming die or by the forming die.

3. A method according to claim 1 or claim 2, **characterised in that** the formed metal sheet is held in position by a holding device after the approximate positioning procedure and during the joining procedure.

4. A method according to any of claims 1 to 3, **characterised in that** the welding device is controlled by the positioning device or is part of the positioning device.

5. A method according to any of claims 1 to 4, **characterised in that** the forming die has an embossing element by which the reference marking is embossed in the metal sheet.

6. A method according to claim 5, **characterised in that** the embossing element is fixedly connected to a die part of the forming die or is an integral component of the die part.

7. A method according to claim 5, **characterised in that** the embossing element is arranged such that it can move relative to a die part of the forming die.

8. A method according to any of claims 1 to 7, **characterised in that** the reference marking is rotationally symmetrical, especially **in that** the reference marking has the shape of a dome-shaped depression.

9. A method according to any of claims 1 to 8, **characterised in that** the actual position of the first fixing element relative to at least one orientation feature of the formed metal sheet is determined by a measuring device.

10. A method according to claim 9, **characterised in that** the at least one orientation feature is likewise produced by the forming die or in the forming die during the forming procedure.

11. A method according to any of claims 1 to 10, **characterised in that** a second component is fixed on the formed metal sheet component, a second fixing element provided on the second component forming a detachable connection with the first fixing element.

12. A method according to claim 11, **characterised in that** the second component is fixed on the formed metal sheet component by means of an electronically controlled positioning device, especially by means of a robot, positional data being supplied to the electronically controlled positioning device or positional data, generated by a position recognition device, of the first fixing element and/or of the formed metal sheet component being supplied to the electronically controlled positioning device.

13. A method according to claim 12, **characterised in that** when the two components are fixed together in a detachable manner, the first fixing element is inserted into the second fixing element provided on the second component along an insertion direction and is clamped therein.

14. A method according to any of the preceding claims, **characterised in that** after being detachably connected, the two components are fixed relative to one another in an non-displaceable manner in directions transverse to the insertion direction.

15. A method according to any of claims 11 to 14, **characterised in that** the two fixing elements form a locking or snap connection, the first fixing element being locked in the second fixing element or being brought into a position engaging behind the second fixing element.

16. A method according to any of claims 11 to 15, **characterised in that** the two components are clamped against one another on the fixing elements in a force-locking and/or form-locking manner.

17. A method according to any of claims 11 to 16, **characterised in that** after being detachably connected, the two components are connected together in a permanently fixed manner or in an undetachable manner.

18. A method according to any of claims 11 to 17, **characterised in that** after being detachably connected, the two components are welded together.

19. A method according to claim 18, **characterised in that** before or during the welding procedure, the two components are held relative to one another exclusively by first and second fixing elements which are connected together in a detachable manner.

20. A method according to any one of claims 1 to 19, **characterised in that** the at least one first fixing element or the at least one second fixing element is a male fixing element, and the other fixing element which cooperates therewith, is a female element, the two components being clamped against one another by interlocking the two fixing elements.

21. A method according to claim 20, **characterised in that** the male fixing element is oversized with respect to the female fixing element transversely to an insertion direction in which it is inserted into the female fixing element, the two components being clamped against one another on the fixing elements.

22. A method according to any of claims 1 to 21, **characterised in that** an element consisting completely of metal, especially consisting of steel or aluminium, is used as the first fixing element.

23. A method according to any of claims 1 to 22, **characterised in that** used as the first fixing element is an element which has
• a functional head which partly or completely has the shape of a sphere or completely or partly or completely has a shape similar to a sphere, and
• a foot portion joined to the functional head, the foot portion being connected to the formed metal sheet component.

24. A method according to any of claims 20 to 23, **characterised in that** the female fixing element is produced by making a passage hole in the second component.

25. A method according to claim 24, **characterised in that** a passage hole is produced which has a shape differing from a circular shape, especially a shape which is similar to a square or a triangle.

## Revendications

1. Procédé d'obtention d'une pièce, en particulier d'une pièce de carrosserie de véhicule ou d'une pièce composite constituée de plusieurs pièces comprenant des étapes consistant à :
- mettre en forme une tôle dans un outil de formage, en particulier un outil d'emboutissage profond,
- former un repère de référence au niveau d'un endroit prédéfini de la tôle,
- la position du repère de référence étant identifiée au moyen d'un dispositif d'identification de position, en particulier au moyen d'un système de caméra, le dispositif d'identification de position produisant des données de position correspondant à la position du repère de référence,
procédé selon lequel
- la tôle mise en forme est positionnée grossièrement au moyen d'un dispositif de positionnement de sorte que le repère de référence soit situé dans une zone spatiale prédéfinie,
- un premier élément de fixation est positionné à l'endroit du repère de référence sur le fondement des données de position au moyen d'un dispositif de positionnement à commande électronique, le premier élément de fixation utilisé, ayant partiellement ou en totalité la forme d'une sphère ou partiellement ou en totalité une forme similaire à une sphère, et
- le premier élément de fixation est relié à la tôle mise en forme, en particulier le premier élément de fixation est soudé à la tôle mise en forme au moyen d'un dispositif de soudage.

2. Procédé conforme à la revendication 1,
**caractérisé en ce que**
le repère de référence est obtenu pendant la mise en forme dans l'outil de formage ou au moyen de l'outil de formage.

3. Procédé conforme à la revendication 1 ou 2,
**caractérisé en ce que**
la tôle mise en forme est maintenue dans sa position après le positionnement grossier et pendant la liaison au moyen d'un dispositif de retenue.

4. Procédé conforme à l'une des revendications 1 à 3,
**caractérisé en ce que**
le dispositif de soudage est commandé par le dispositif de positionnement ou est une partie du dispositif de positionnement.

5. Procédé conforme à l'une des revendications 1 à 4,
**caractérisé en ce que**
l'outil de formage comprend un élément d'estampage permettant d'estamper le repère de référence dans la tôle.

6. Procédé conforme à la revendication 5,
**caractérisé en ce que**
l'élément d'estampage est relié solidairement à une partie moulée de l'outil de formage ou est un composant intégral de cette partie moulée.

7. Procédé conforme à la revendication 5,
**caractérisé en ce que**
l'élément d'estampage peut être déplacé par rapport à une partie moulée de l'outil de formage.

8. Procédé conforme à l'une des revendications 1 à 7,
**caractérisé en ce que**
le repère de référence présente une symétrie de rotation, et en particulier le repère de référence a la forme d'une cavité en forme de calotte.

9. Procédé conforme à l'une des revendications 1 à 8,
**caractérisé en ce que**
la position réelle du premier élément de fixation par rapport à au moins une caractéristique d'orientation de la tôle mise en forme est déterminée au moyen d'un dispositif de mesure.

10. Procédé conforme à la revendication 9,
**caractérisé en ce que**
la caractéristique d'orientation est également produite au moyen ou dans l'outil de formage pendant la mise en forme.

11. Procédé conforme à l'une des revendications 1 à 10,
**caractérisé en ce qu'**
une seconde pièce est fixée sur la pièce en tôle mise en forme, un second élément de fixation situé sur la seconde pièce une liaison amovible formant avec le premier élément de fixation.

12. Procédé conforme à la revendication 11,
**caractérisé en ce que**
la seconde pièce est fixée à la pièce en tôle mise en forme au moyen d'un dispositif de positionnement à commande électronique, en particulier au moyen d'un robot, des données de position étant transmises au dispositif de positionnement à commande électronique, ou, des données de position du premier élément de fixation et/ou de la pièce en tôle mise en forme générés par un dispositif d'identification de position étant transmises au dispositif de positionnement à commande électronique.

13. Procédé conforme à la revendication 12,
**caractérisé en ce que**
lors de la fixation amovible des deux pièces, le premier élément de fixation est inséré le long d'une direction d'insertion dans le second élément de fixation prévu sur la seconde pièce et est bloqué sur celui-ci.

14. Procédé conforme à l'une des revendications précédentes,
**caractérisé en ce qu'**
après leur liaison amovible, les deux pièces sont fixées solidairement sans pouvoir coulisser l'une par rapport à l'autre dans des directions transversales à la direction d'insertion.

15. Procédé conforme à l'une des revendications 11 à 14,
**caractérisé en ce que**
les deux éléments de fixation forment une liaison par encliquetage ou par enclenchement, le premier élément de fixation étant encliqueté sur le second élément de fixation ou étant transféré dans une position dans laquelle il vient en prise à l'arrière du second élément de fixation.

16. Procédé conforme à l'une des revendications 11 à 15,
**caractérisé en ce que**
les deux pièces sont bloquées sur les éléments de fixation par une liaison par la force et/ou par une liaison par la forme.

17. Procédé conforme à l'une des revendications 11 à 16,
**caractérisé en ce que**
les deux pièces sont en permanence reliées solidairement ou de façon non amovible après leur liaison amovible.

18. Procédé conforme à l'une des revendications 11 à 17,
**caractérisé en ce qu'**
après leur liaison amovible, les deux pièces sont soudées l'une à l'autre.

19. Procédé conforme à la revendication 18,
**caractérisé en ce qu'**
avant ou pendant le soudage, les deux pièces sont maintenues l'une par rapport à l'autre exclusivement par des premiers et des seconds éléments de fixation assemblés l'un à l'autre de façon amovible.

20. Procédé conforme à l'une des revendications 1 à 19,
**caractérisé en ce que**
le premier élément de fixation ou le second élément de fixation est un élément de fixation mâle alors que l'autre élément de fixation coopérant avec cet élément de fixation est un élément de fixation femelle, les deux pièces étant bloquées l'une sur l'autre par enfichage des deux éléments de fixation.

21. Procédé conforme à la revendication 20,
**caractérisé en ce que**
l'élément de fixation mâle comporte, un excès par rapport à l'élément de fixation femelle transversalement à la direction d'insertion dans laquelle il est inséré dans cet élément de fixation femelle, les deux pièces étant bloquées l'une sur l'autre au niveau des éléments de fixation.

22. Procédé conforme à l'une des revendications 1 à 21,
**caractérisé en ce qu'**
en tant que premier élément de fixation, on utilise un élément totalement réalisé en métal, en particulier en acier ou en aluminium.

23. Procédé conforme à l'une des revendications 1 à 22,
**caractérisé en ce qu'**
en tant que premier élément de fixation, on utilise un élément qui comporte :
- une tête fonctionnelle qui a partiellement ou en totalité la forme d'une sphère ou a partiellement ou en totalité une forme similaire à une sphère, et
- un segment de base relié à la tête fonctionnelle, ce segment de base étant relié à la pièce en tôle mise en forme.

24. Procédé conforme à l'une des revendications 20 à 23,
**caractérisé en ce que**
l'élément de fixation femelle est obtenu par réalisation d'un perçage traversant dans la seconde pièce.

25. Procédé conforme à la revendication 24,
**caractérisé en ce que**
l'on réalise un perçage traversant qui a une forme différente d'une forme circulaire, en particulier la forme d'un carré ou la forme d'un triangle.
